(19)

Europäisches
Patentamt
European
Patent Office
Office européen
des brevets

(11) **EP 2 538 170 A1**

(12) **EUROPEAN PATENT APPLICATION**
published in accordance with Art. 153(4) EPC

(43) Date of publication:
**26.12.2012 Bulletin 2012/52**

(21) Application number: **11850560.1**

(22) Date of filing: **09.11.2011**

(51) Int Cl.:
**G01B 11/255** (2006.01)       **G01B 11/06** (2006.01)
**G01B 11/14** (2006.01)       **G01N 21/45** (2006.01)
**G01M 11/02** (2006.01)

(86) International application number:
**PCT/CN2011/081986**

(87) International publication number:
**WO 2012/083764 (28.06.2012 Gazette 2012/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010  CN 201010621159**

(71) Applicant: **Beijing Institute Of Technology
Beijing 100081 (CN)**

(72) Inventors:
• **ZHAO, Weiqian
  Beijing 100081 (CN)**

• **YANG, Jiamiao
  Beijing 100081 (CN)**
• **QIU, Lirong
  Beijing 100081 (CN)**
• **WANG, Yun
  Beijing 100081 (CN)**
• **LI, Jia
  Beijing 100081 (CN)**

(74) Representative: **Epping - Hermann - Fischer
Patentanwaltsgesellschaft mbH
Ridlerstrasse 55
80339 München (DE)**

(54) **METHOD AND DEVICE FOR MEASURING MULTIPLE PARAMETERS OF DIFFERENTIAL CONFOCAL INTERFERENCE COMPONENT**

(57)    The present invention relates to the field of optical precision measurement technologies, and in particular, to a method and a device of differential confocal (confocal) and interference measurement for multiple parameters of an element. The core concept of the invention lies in that: the concurrent high-precision measurement of multiple parameters of an element may be realized by measuring the surface curvature radius of an element with spherical surface, the back focal length of a lens, the refractive index of a lens, the thickness of a lens and the axial spaces of an assembled lenses by using a differential confocal (confocal) measuring system and measuring the surface profile of the element by using a figure interference measuring system. In the invention, a differential confocal (confocal) detection system and a figure interference measuring system are combined for the first time, the method covers more measured parameters, and during the measurement of multiple parameters of an element, it is not essential to readjust the optical path or disassemble the test element, thus no damage will be caused on the test element, and the measurement speed will be fast.

Fig. 1

**EP 2 538 170 A1**

**Description**

**Field of the Invention**

The present invention relates to the field of optical precision measurement technology, which can be applied to measure multiple parameters and the surface profile of an element with high precision.

**Background of the Invention**

In the field of optical precision measurements, it has important meanings to measure various parameters of an element with high precision. There are many kinds of element parameters, for example, the surface curvature radius of an element with spherical surface, the refractive index of a lens, the center thickness of a lens, the axial spaces of an assembled lenses and the surface profile of an element, etc. These parameters are very important in the manufacturing process of an optical element, and the processing accuracy will have a significant effect on the imaging quality of an optical system. Especially, in high-performance optical systems such as object lenses of a lithography machine and lens of an astronautic camera, etc., extremely strict requirements are often laid on multiple parameters of an internal optical element thereof. For example, for the object lenses of a lithography machine, the deviation of the surface curvature radius, of the center thickness and of the material refractive index and the decrease of the accuracy of the surface profile of each lens will cause the increase in the aberration of the system, thereby affecting the imaging quality of the system. Therefore, in a high-performance optical system, every parameter of each optical element after being manufactured must be measured with high precision so as to ensure its optical performance.
At present, methods and devices for measuring various element parameters have come into existence one after another. So far there have been various tried-and-true measuring methods.
For example, for the measurement of surface curvature radius, there exist the following measuring methods currently: spherical template method, spherometer method, autocollimation method, interferometer method, knife-edge testing method, Newton rings method, shearing interferometer method and moiré deflectometry method, etc. Spherical template method and spherometer method belong to contact measurement, which are simple and do not need component polishing. However, spherical template method is only suitable for measuring a small curvature radius and its measurement accuracy will be largely affected by the surface profile of the template. During contact measurement, there exists a measurement error resulted from the wearing and pressing of spherical surface. Autocollimation method belongs to non-contact measurement, but component polishing is needed, in which the adjustment of optical paths is complex, and it is difficult for focusing and aligning, thus system error may be caused during measuring. Interferometer method, knife-edge testing method, Newton rings method, shearing interferometer method and moiré deflectometry method are generally used for measuring a large curvature radius. Interferometer method, during measuring, may be interfered by factors such as temperature, air flow, vibration and noise, etc., thus the measurement accuracy will be largely affected. In "Measuring a small spherical curvature radius via an interference microscope" published on Infrared And Laser Engineering, 2006, a method for measuring the curvature radius of a spherical surface via a single-frame static interference figure is researched. In "Radius case study: Optical bench measurement and uncertainty including stage error motion" published on SPIE, 2005, a submicron-level measurement accuracy on a curvature radius is realized by the precise focusing with an interferometer.
For focal length measurement, new measuring methods are proposed by scholars, and the papers published mainly include: "Measurement of the focal length of a long focal length system by Talbot interferometry method" in Chinese Measurement And Test*; and "Researches on the accuracy limit of the measurement of long focal length via Ronchi grating and Talbot effect" in Acta Photonica Sinica. In such technologies, focusing is realized mainly by employing Talbot interferometry method and using Ronchi grating and Talbot effect, and focal length is measured via digital signal processing technology.
For the measurement of lens refractive index and thickness, nondestructive measuring methods are proposed by scholars, for example, "Method For High-Precision Non-Contact Measurement Of Lens Refractive Index" in Geomatics and Information Science of Wuhan University and "Measurement Of The Refractive Index Of A Lens By Using An Annular Lateral Shearing Interferometer" in Journal of Harbin University of Science and Technology. Such technologies mainly employs immersion method, that is, the refractive index of a lens to be measured is obtained by adjusting the mixing ratio of liquids with different refractive indices to make the refractive index of the mixed liquids match with that of the test lens, and measuring the refractive index of the mixed liquids by using methods such as Abel method, etc. The measurement accuracy obtained with this method is somewhat higher than that obtained with traditional lens imaging measuring method, but it has a defect that the preparation process of the refractive index liquid is boresome and the thickness needs to be measured separately, thus an auxiliary measuring apparatus is needed and it is difficult to realize engineering. Eduardo A. Barbosa, et al. proposes a method for measuring the refractive index and thickness of a lens by employing multi-mode laser interference in "Refractive and geometric lens characterization through multi-wavelength digital speckle pattern interferometry" (Optics Communications, 281, 1022 - 1029, 2008). In this method, the refractive index and thickness of a lens are calculated by collecting the interference figures of reflected light on both sides of the test lens via multi-step phaseshift. The measuring process of this method is simple and convenient, and the measurement may be carried out independently. However it has a defect that the data processing procedure is boresome and the measurement accuracy is not high because interference imaging tends to be interfered by the environment.

In the technology for measuring the axial space of an assembled lenses, there exist the following advanced methods: image measuring method, white light confocal method and interference method. In the context of "Researches On On-Line Measurement Of Assembly Space Based On Image Measurement Technology' published in Sensor Technology, 2005, an on-line measurement scheme based on image measurement technology is introduced, in which an image of the spaces of an assembled lenses formed in a CCD camera with an optical system is delivered to an image measurement software for processing and analyzing and a result is given by the measurement software. During the assembling of an assembled lenses, the axial spaces between multiple lenses may be measured in real time. However, as affected by the camera imaging system, CCD resolving ability, image definition and calibration factor accuracy, etc., it is difficult to achieve a high measurement accuracy, with a measurement error within 0.015mm. In Chinese patent "Method And Apparatus For Non-Contact Measurement of Air Space Of An Optical System" (Patent Number: 01133730.3), non-contact measurement of an air space is realized by employing the principle of interference positioning. During the assembling of an assembled lenses, this method may substitute for a contact measuring method to guarantee air spaces between the lenses in the assembled lenses. The vertexes of the upper surfaces of two lenses assembled sequentially may be precisely positioned by moving a standard lens. The air space between two lenses may be obtained by subtracting the thickness of a lens assembled later from the amount of movement in the two positioning steps of the standard lens. However, for an assembled lenses that has been finished, space measurement cannot be carried out inside the assembled lenses.

For the measurement of surface profile, foreign countries started earlier and achieved advanced machining and detecting technologies, being on the world's leading edge especially in the field of light interference measurement. Fizeau digital surface profile interferometer manufactured by Zygo Corporation, USA may be taken as the world standard, and technical reforms are being made steadily as the demand changes. GPI series interferometers manufactured by Zygo Corporation utilize the principle of phaseshift interference to provide high-precision measurement and analysis of planar surface profile, spherical surface profile, curvature radius, sample surface quality and transmission wave-front. With GPI series interferometers, a measuring result with high precision and high quality can be obtained by employing precise phaseshift technology and high-resolution CCD receiving device (up to 2048x2048) in combination with powerful MetroProTM software, which has PV absolute precision superior to $\lambda/100$ for the measurement of a planar sample and PV absolute precision superior to $\lambda/140$ for the measurement of a spherical sample. Wyko NT91 00 optical contourgraph developed and manufactured by Wyko Corporation, USA is a handy, precise and practical non-contact 3-D appearance measuring system. The system employs double light source lighting technology to realize non-contact measurement of both super-smooth surface and rough surface concurrently. The system has an application range that covers sub-nanometre level roughness measurement to millimeter scale stage height measurement. In recent years, a good many innovations have also been made in the field of light interference measurement by domestic academies, researching institutes and photoelectric instrument corporations. CXM-25L and CXM-25W minitype interferometers manufactured by Nanjing Polytechnic Besso Photoelectric Technology Co., Ltd, realize the miniaturization of apparatus structure by using Fizeau interference principle, which can measure optical components with planar and spherical surface, with a measuring accuracy of $\lambda/20$ for planar optical components and a measuring accuracy of $\lambda/10$ for optical components with spherical surface. OSI-120SQ laser spherical interferometer from Cheng Du Techo Photoelectricity Co., Ltd has a maximum working aperture of 120mm, the PV value of a standard reference mirror surface superiors to $\lambda/20$, the PV value of a spherical reference mirror surface superiors to $\lambda/15$ and a measurement repeatability precision superior to $\lambda/100$, and it can realize the measurement of optical spherical surface profile, curvature radius and optical planar surface profile.

Thus it can be seen that at present, although there are various methods and devices for measuring element parameters, the following problems still exist. Firstly, some of the methods introduced above employ contact measurement, for example, spherical template method and spherometer method, to measure the curvature radius of a spherical surface. These measuring methods will press or wear the surface of an test element and thus have low measurement accuracy. Secondly, although some measuring methods have high measurement accuracy, the measuring process thereof is boresome and complex, for example, immersion method for measuring the refractive index of a lens, thus it is difficult to realize engineering. Thirdly, none of the above various methods can measure multiple parameters concurrently with high precision, for example, although the interferometers manufactured by Zygo Corporation, USA can measure the surface profile with high precision, problems such as low positioning precision come into existence when they are used for measuring other parameters.

In recent years, differential confocal (confocal) technology in the field of micro-imaging has developed rapidly both domestically and in abroad. This technology takes the axial light intensity response curve as an evaluation criterion, and it has higher sensitivity than that of the evaluation method in vertical shaft direction, and because it employs light intensity as data information, it has higher anti-environment interference ability in comparison with the image processing method. For example, Chinese patent "Differential Confocal Scanning And Detecting Method With High Spatial Resolution" (Patent Number: 200410006359.6) proposed a method for super-resolution differential confocal detection, in which the axial resolving ability of the system reaches nanometre level and the anti-environment disturbance ability is improved significantly.

Thereupon, the present inventors propose various methods and devices for measuring element parameters by using differential confocal principle. For example, in the context of "Laser Differential Confocal Radius Measurement" (Optics Express, Vol.18, No.3, 2345-2360, 2010), the present inventors propose to realize a high-precision measurement of the curvature radius by precisely positioning the "cat eye location" and "confocal location" by utilizing the property that the absolute zero point of the axial light intensity response curve generated by a differential confocal detection system precisely corresponds to the focus of the object lens in the differential confocal detection system. Another example is the Chinese patent "Method And Device For Measuring The Refractive Index And Thickness Of A Lens Based On Differential Confocal Technology" (Patent Number: 201010173084), in which a method and a device for measuring the refractive index and thickness of a lens based on differential confocal technology are proposed. In this method, the absolute zero points of laser differential confocal response curves are utilized to precisely determine the intersection point of the front surface of the test lens and the optical axis, the intersection point of the back surface and the optical axis and the locations of the object lens when a test lens exists and does not exist, and then ray tracing calculation is performed surface by surface for the two spherical surfaces of the test lens and the reflector by using the location of the object lens and the premeasured curvature radius of the test lens, focal length and pupil size of the object lens, thereby realizing high-precision nondestructive measurement of the refractive index and thickness of the test lens. Another example is the Chinese patent "Method And Device For Measuring The Axial Space Of An Assembled lenses Based On Differential Confocal Technology" (Patent Number: 201010000553), in which a method and device for measuring the axial spaces of an assembled lenses is proposed. In this method, high-precision positioning is first realized for each lens surface in the assembled lenses via the principle of differential confocal focusing, and the location coordinate of the differential confocal gauge head at each positioning point is obtained, then each axial space in the assembled lenses is calculated in turn by using a ray tracing recurrence formula.

Although the measurement accuracy of element parameters is significantly improved in the above proposed differential confocal measuring methods, only a certain parameter of an element can be measured, and multiple parameters of the element cannot be concurrently measured, not to mention the surface profile of the element. The present invention of "Method And Device of Differential Confocal And Interference Measurement for Multiple Parameters of an Element" proposes for the first time a combination of differential confocal (confocal) measurement technology and interference measurement technology to realize the concurrent measurement of multiple parameters and the surface profile of an element, thereby greatly lowering the cost for measuring multiple parameters of an element, while improving the measurement precision and strengthening the anti-environment interference ability.

**Summary of the Invention**

It is an object of the present invention to propose a method that combines differential confocal (confocal) detection technology and surface profile interference measurement technology, to solve the problem of measuring multiple parameters of an element with high precision and measuring the surface profile of an element concurrently, in which the measurement of the surface curvature radius of an element with spherical surface, the back focal length of a lens, the refractive index and the thickness of a lens and the axial spaces of an assembled lenses are realized by using the high-precision positioning property of the differential confocal (confocal) detection system, and the measurement of the surface profile of an element is realized by using a figure interference measuring system.

The object of the present invention is realized by the following technical solutions.

A method of differential confocal and interference measurement for multiple parameters of an element according to the present invention comprises the following steps: turning on a point light source, wherein a light emitted from the point light source passes through a first beam splitter, a collimating lens and a converging lens to form a measurement beam that irradiates on a test element; adjusting the optical axis of the test element such that it is co-optical-axial with the measurement beam; passing the light reflected by the test element through the converging lens and the collimating lens, and reflecting the light by the first spectroscope to a second beam splitter which divides the light into two paths, wherein one path enters a figure interference measuring system, and the other path enters a differential confocal measuring system; forming an interference pattern by the figure interference measuring system, and forming a differential confocal response signal by the differential confocal measuring system. The surface profile of a test element is measured via the interference pattern, and the surface curvature radius of an element with spherical surface, the back focal length of a lens, the refractive index of a lens, the thickness of a lens and the axial spaces of an assembled lenses are measured via the differential confocal response signal.

The present invention provides a device of differential confocal and interference measurement for multiple parameters of an element, which comprises a point light source, characterized in that: the device comprises a first beam splitter, a collimating lens, a converging lens, a second beam splitter, a differential confocal measuring system and a figure interference measuring system; wherein the first beam splitter, the collimating lens and the converging lens are placed in the light emission direction, the second beam splitter is placed in the reflection direction of the first beam splitter and it divides the light into two paths, wherein one path of the light enters the differential confocal measuring system, and the other path enters the figure interference measuring system.

The present invention further provides a device of confocal and interference measurement for multiple parameters of an element, which comprises a point light source, characterized in that: the device comprises a first beam splitter, a collimating lens, a converging lens, a second beam splitter, a confocal measuring system and a figure interference measuring system, wherein the first beam splitter, the collimating lens and the converging lens are placed in the light emission direction, the second beam splitter is placed in the reflection direction of the first beam splitter and it divides the light into two paths, wherein one path of the light enters the confocal measuring system, and the other path enters the figure interference measuring system, a confocal response signal is formed by the confocal measuring system, and an interference pattern is formed by the figure interference measuring system, the surface curvature radius of an element with spherical surface, the back focal length of a lens, the refractive index of a lens, the thickness of a lens and the axial space of an assembled lenses are measured via the confocal response signal, and the surface profile of a test element is measured via the interference pattern.

The present invention has the following beneficial effects.

In comparison with the prior art, the invention has the following main innovation points:

1) By integrally combining a differential confocal (confocal) detection system and a figure interference measuring system, the concurrent measurement of multiple parameters and the surface profile of an element can be realized;

2) In a differential confocal detection system, the precise positioning of an element is realized based on a focus tracing measuring method triggered by zero-cross of the absolute zero point;

3) During the measurement of multiple parameters of an element, it is not essential to readjust the optical path or to disassemble the test element, no damage will be caused on the test element, and the measurement speed will be fast, etc.

In comparison with the prior art, the present invention has the following main advantages:

1) Surface profile interference technology and differential confocal (confocal) focusing technology are combined. The surface profile of an element is measured by using a figure interference measuring system, and the surface curvature radius of an element with spherical surface, the back focal length of a lens, the refractive index of a lens, the thickness of a lens and the axial spaces of an assembled lenses are measured by using a differential confocal (confocal) measuring system, thus concurrent measurement of multiple parameters of an element can be realized, and the measuring efficiency can be improved.

2) Surface profile interference measurement and differential confocal (confocal) measurement belong to non-contact nondestructive measuring method, in which no surface processing of the test element is needed, and the measuring method is easy and simple.

3) The target location is determined by using the zero-cross point of a differential confocal response curve, thus the focusing precision of the target is improved.

4) The differential confocal (confocal) measuring system takes the axial light intensity response as the basis for focusing, and the anti-environment interference ability, etc., of the measuring system is significantly improved.

**Brief Description of the Drawings**

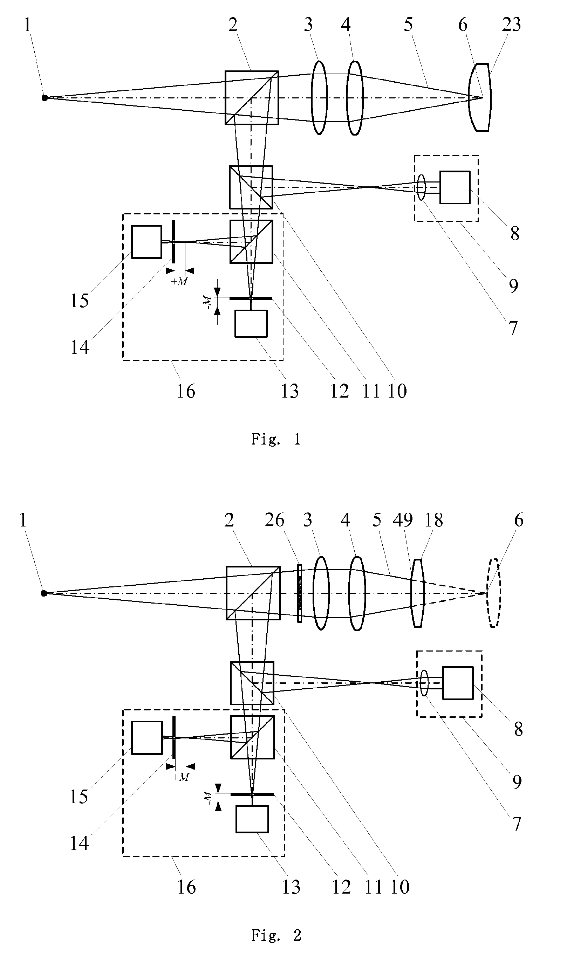

Fig.1 is a schematic diagram of a method of differential confocal and interference measurement for multiple parameters of an element according to the present invention;

Fig.2 is a schematic diagram of a method of differential confocal and interference measurement for the surface curvature radius of an element with spherical surface according to the present invention;

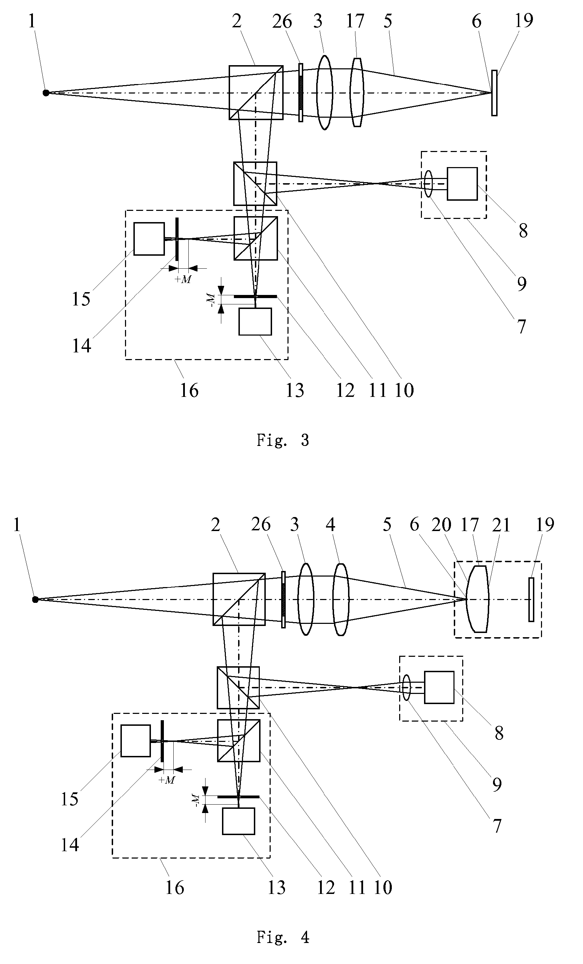

Fig.3 is a schematic diagram of a method of differential confocal and interference measurement for the back focal length of a lens according to the present invention;

Fig.4 is a schematic diagram of a method of differential confocal and interference measurement for the refractive index and the thickness of a lens according to the present invention;

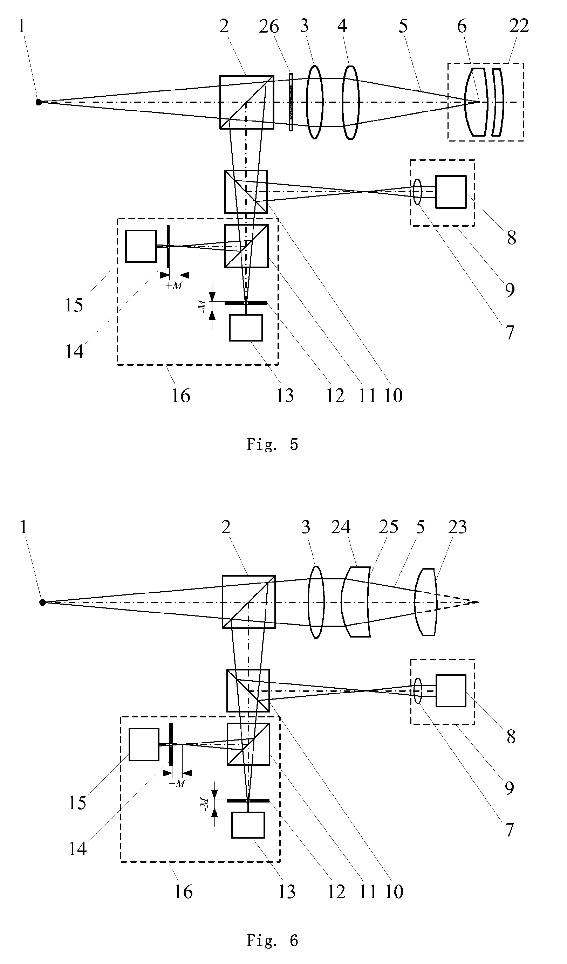

Fig.5 is a schematic diagram of a method of differential confocal and interference measurement for the axial spaces of an assembled lenses according to the present invention;

Fig.6 is a schematic diagram of a method of differential confocal and interference measurement for the surface profile of an element according to the present invention;

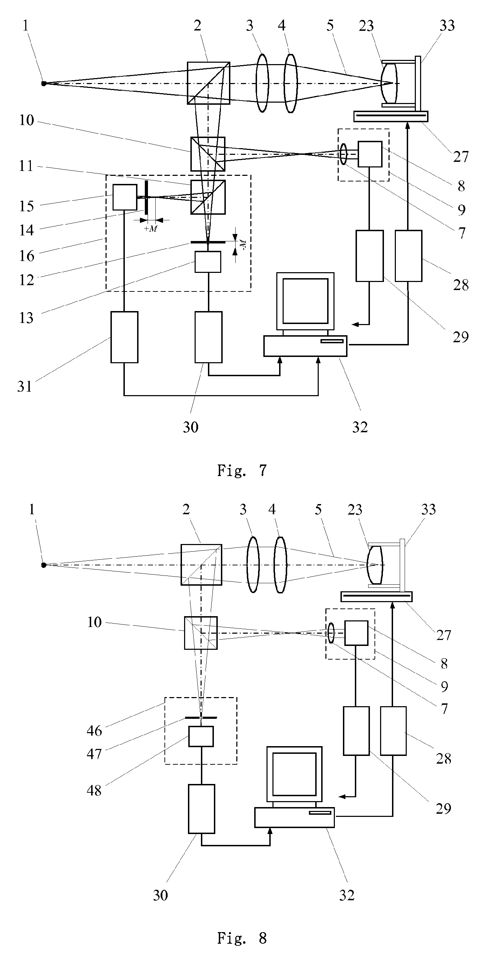

Fig.7 is a schematic diagram of a device of differential confocal and interference measurement for multiple parameters of an element according to the invention;

Fig.8 is a schematic diagram of a device of confocal and interference measurement for multiple parameters of an element according to the present invention;

Fig.9 is a schematic diagram of an embodiment of the differential confocal and interference measurement for the surface curvature radius of an element with spherical surface according to the present invention;

Fig.10 is a schematic diagram of an embodiment of the differential confocal and interference measurement for the back focal length of a lens according to the present invention;

Fig.11 is a schematic diagram of an embodiment of the differential confocal and interference measurement for the refractive index and the thickness of a lens according to the present invention;

Fig.12 is a schematic diagram of an embodiment of the differential confocal and interference measurement for the axial spaces of an assembled lenses according to the present invention;

Fig.13 is a schematic diagram of an embodiment of the differential confocal and interference measurement for the surface profile of an element according to the present invention;

Fig.14 is a schematic diagram of an embodiment of confocal and interference measurement for the surface curvature radius of an element with spherical surface according to the present invention;

Fig.15 is a confocal response curve detected by a confocal measuring system according to the present invention; and

Fig.16 is a differential confocal response curve detected by a differential confocal measuring system according to the present invention.

wherein: 1-point light source, 2-first beam splitter, 3-collimating lens, 4-converging lens, 5-measurement beam, 6-the focus of the measurement beam, 7-interference collimating lens, 8-image sensor, 9-figure interference measuring system, 10-second beam splitter, 11-third beam splitter, 12-pinhole before focus, 13-first light intensity sensor, 14-pinhole behind focus, 15-second light intensity sensor, 16-differential confocal measuring system, 17-test lens, 18-test element with spherical surface, 19-reflector, 20-the front surface of the test lens, 21-the back surface of the test lens, 22-test assembled lenses, 23-test element, 24-transmission sphere, 25-the reference surface of the transmission sphere, 26-annular pupil, 27-translation stage, 28-electromechanical control device, 29-AD acquisition module, 30-AD acquisition module, 31-AD acquisition module, 32-master control computer, 33-adjusting mount, 34-micro-objective with the object plane before focus, 35-micro-objective with the object plane behind focus, 36-laser point light source emitting device, 37-laser, 38-optical fiber, 39-5D adjusting mount, 40-CCD, 41-CCD, 42-CCD, 43-image capture card, 44-image capture card, 45-image capture card, 46-confocal measuring system, 47-pinhole, 48-light intensity sensor, 49-the surface of the test element with spherical surface, 50-micro-objective and 51-CCD.

## Detailed Description of the Embodiments

The present invention will be further illustrated below in combination with the drawings and specific embodiments.

The present invention utilizes a method in which differential confocal (confocal) detection technology and surface profile interference measurement technology are combined, and the basic concept thereof lies in that, high-precision measurement of the surface curvature radius of a lens, the back focal length of a lens, the refractive index of a lens, the thickness of a lens and the axial spaces of an assembled lenses are realized by precisely positioning the target location of a test element using differential confocal (confocal) principle, and high-precision measurement of the surface profile of an element is realized by using multi-step phaseshift interference measurement principle.

**Embodiment 1**

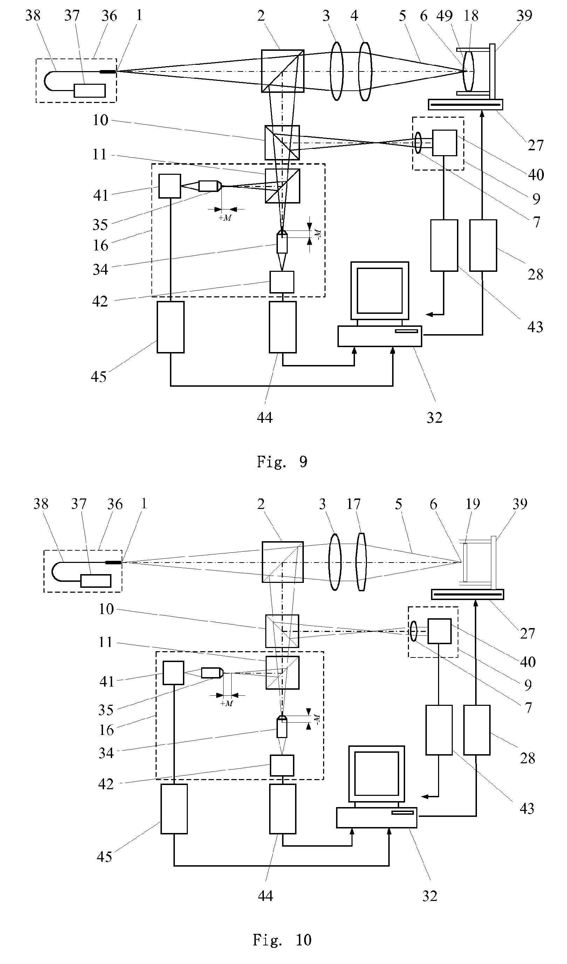

When the curvature radius of a convex spherical surface is measured by a device of differential confocal and interference measurement for multiple parameters of an element, the device of differential confocal and interference measurement for multiple parameters of an element is as shown in Fig.9, the measuring steps are as follows:

a) starting up a measurement software in a master control computer 32, and turning on a laser 37, wherein the light emitted by the laser 37 forms a point light source 1 after being transmitted via an optical fiber 38, and the light emitted from the point light source 1 forms a measurement beam 5 after passing through a first beam splitter 2, a collimating lens 3 and a converging lens 4;

b) fixing a test element with spherical surface 18 on a 5 dimensional (5D) adjusting mount 39; irradiating the measurement beam 5 on a surface of the test element with spherical surface 49, and passing the light reflected by the surface 49 of the element with spherical surface to be measured through the converging lens 4 and the collimating lens 3, then reflecting the light by the first beam splitter 2 to a second beam splitter 10 which divides the light into two paths, wherein one path enters a figure interference measuring system 9, and the other path enters a differential confocal measuring system 16;

c) moving the test element with spherical surface 18 by a translation stage 27 along the optical axis to a location where the focus of the measurement beam 6 approaches the spherical center of the surface of the test element with spherical surface 49, observing the light spot in a CCD 41 reflected by the surface of the test element with spherical surface 49, and adjusting the 5D adjusting mount 39 such that the center point of the light spot is located at the center location of the CCD 41, then the test element with spherical surface 18 becomes co-optical-axial with the measurement beam 5;

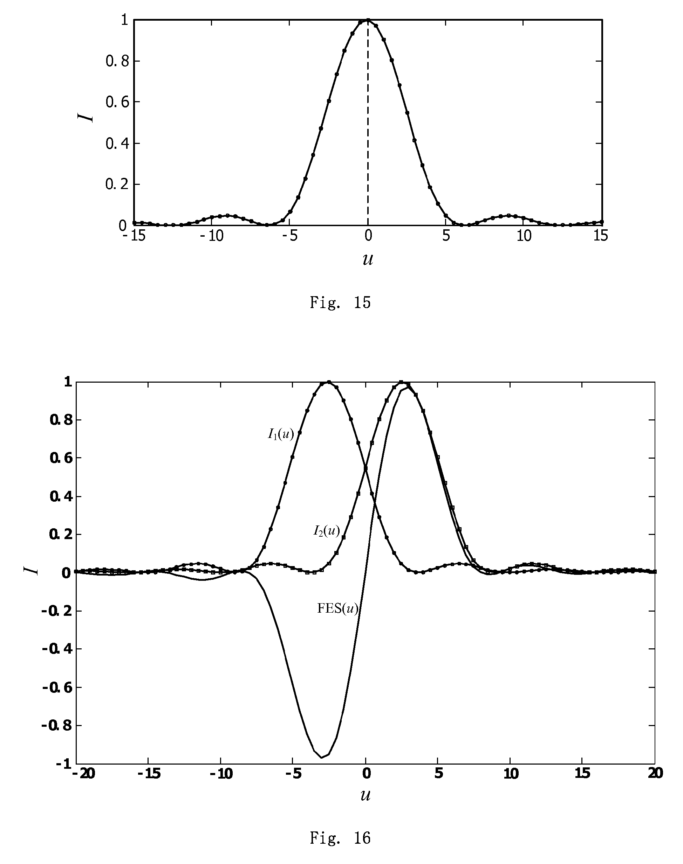

d) controlling the axial translation of the translation stage 27 by the measurement software of the master control computer 32 via an electromechanical control device 28, so that the test element with spherical surface 18 is driven to be scanned along the optical axis direction, obtaining a differential confocal response curve as shown in Fig.16 by the measuring software via the differential confocal measuring system 16 when the focus of the measurement beam 6 sweeps over the vertex of the surface of the test element with spherical surface 49, and determining, by detecting the absolute zero point of the differential confocal response signal, that the focus of the measurement beam 6 coincides with the vertex of the surface of the test element with spherical surface 49, and recording the current location $Z_1$=5.0787mm of the test element with spherical surface 18;

e) moving the test element with spherical surface 18 such that it is scanned along the optical axis direction, and obtaining the differential confocal response curve as shown in Fig.16 when the focus of the measurement beam 6 sweeps over the spherical center of the surface of the test element with spherical surface 49, determining, by detecting the absolute zero point of the differential confocal response signal with the measuring software, that the focus of the measurement beam 6 coincides with the spherical center of the surface of the test element with spherical surface 49, and recording the current location $Z_2$=-31.6262mm of the test element with spherical surface 18;

f) calculating the distance $|Z_1-Z_2|$=36.7049mm between the two locations, thus the curvature radius r of the surface of the test element with spherical surface 49 is 36.7049mm; and

g) measuring the curvature radius of the surface of the test element with spherical surface 49 for several times, obtaining the repeatability of measurement $\delta k$=0.2$\mu$m, and the relative measurement error of 5 ppm.

As shown in Fig.9, the device of differential confocal and interference measurement for multiple parameters of an element comprises: a laser point light source generating device 36; a first beam splitter 2, a collimating lens 3 and a converging lens 4 that are arranged in turn in the direction of the light emitted from a point light source 1; a second beam splitter 10 arranged in the reflection direction of the first beam splitter 2; and a differential confocal measuring system 16 and a figure interference measuring system 9 that are splitted from the second beam splitter 10. A master control computer 32 is connected with an electromechanical control device 28, so that a translation stage 27 is driven, thereby driving the test element with spherical surface 18 to be scanned along the optical axis direction.

When the device is used for measuring the surface curvature radius of a lens, the differential confocal measuring system 16 in the system is used to position the vertex and the spherical center of the surface of the test element with spherical surface 49 with high precision, thereby measuring the surface curvature radius thereof.

Generally, the differential confocal measuring system 16 has two modes: differential confocal measuring system employing pinhole detection, and differential confocal measuring system employing micro-objective detection. Because in comparison with differential confocal measuring system employing pinhole detection, differential confocal measuring system employing micro-objective detection has the advantages of convenient installing and debugging, as well as easy adjusting of the test lens, a differential confocal measuring system employing micro-objective detection is used herein. At this point, the light that enters the differential confocal measuring system 16 is divided into two paths, wherein one path passes through a micro-objective with the object plane before focus 34 and images on a CCD 42, and the other path passes through a micro-objective with the object plane behind focus 35 and images on a CCD 41. An image capture card 44 collects an analog signal detected by the CCD 42 and converts it into a digital signal. An image capture card 45 collects an analog signal detected by the CCD 41 and converts it into a digital signal. The two paths of signals are concurrently transmitted to a master control computer 32, and the master control computer 32 carries out differential processing on the two paths of signals collected from the CCD 41 and the CCD 42 and obtains a differential confocal signal.

**Embodiment 2**

When the back focal length of a convex lens is measured by a device of differential confocal and interference measurement for multiple parameters of an element, as shown in Fig.10, the measuring steps of the device of differential confocal and interference measurement for multiple parameters of an element are as follows:

a) starting up a measurement software in a master control computer, and turning on a laser 37, wherein the light emitted by the laser 37 forms a point light source 1 after being transmitted via an optical fiber 38, and the light emitted from the point light source 1 passes through a first beam splitter 2 and a collimating lens 3 to form a parallel light beam;

b) removing the converging lens 4, and placing a test lens 17 on the optical path of the parallel light emitted from the collimating lens 3, and adjusting the test lens 17 such that it is co-optical-axial with the collimating lens 3, and then passing the parallel light through the test lens 17 to form a measurement beam 5;

c) fixing a reflector 19 on a 5D adjusting mount 39, and making the measurement beam 5 to irradiate on the reflector 19, passing the light reflected by the reflector 19 through the test lens 17 and a collimating lens 3, then reflecting by the first beam splitter 2 to a second beam splitter 10, wherein the second beam splitter 10 divides the light into two paths, one path enters a figure interference measuring system 9, and the other path enters a differential confocal measuring system 16;

d) moving the reflector 19 by a translation stage 27 along the optical axis to a position where the focus of the measurement beam 6 approaches the front surface of the reflector 19, observing a light spot in a CCD 41 reflected by the reflector 19, and adjusting the 5D adjusting mount 39 such that the center point of the light spot is located at the center location of the CCD 41; thus the reflector 19 is perpendicular to the optical axis of the measurement beam 5;

e) controlling the axial translation of the translation stage 27 by the measurement software of the master control computer 32 via a electromechanical control device 28, thereby driving the reflector 19 to be scanned along the optical axis direction, when the focus of the measurement beam 6 sweeps over the surface of the reflector 19, detecting a differential confocal response curve as shown in Fig.16 by the measurement software via the differential confocal measuring system 16, and determining by detecting the absolute zero point of the differential confocal response signal that the focus of the measurement beam 6 coincides with the surface of the reflector 19, and recording the current location $Z_1$=2.1597mm of the reflector 19;

f) moving the reflector 19 such that it is scanned along the optical axis direction, and when the surface of the reflector 19 contacts the back vertex of the test lens 17, recording the current location $Z_2$=1 00.7151 mm of the reflector 19; and

g) calculating the distance $|Z_1-Z_2|$=102.8748mm between the two locations, then the back focal length of the test lens 17 is 102.8748mm.

When the device is used for measuring the back focal length of a lens, the position method is the same as those in Embodiment 1 except for that the converging lens 4 is needed to be removed and to be replaced with the test lens 17 and the differential confocal measuring system 16 detects the light reflected by the reflector 19 during the measurement.

**Embodiment 3**

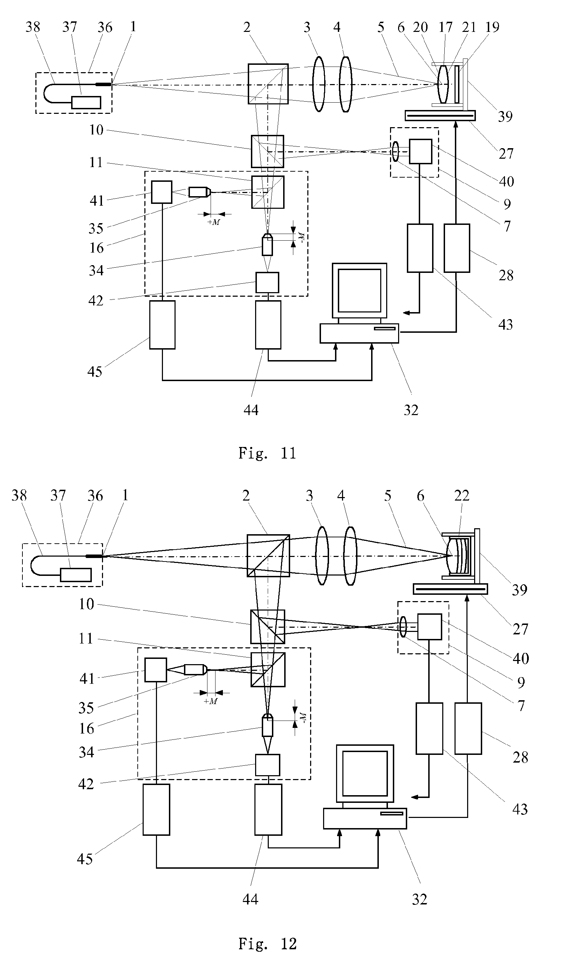

When the refractive index and the thickness of K9 plano-convex lens is measured by a device of differential confocal and interference measurement for multiple parameters of an element, as shown in Fig.11, the measuring steps of the device of differential confocal and interference measurement for multiple parameters of an element are as follows:

a) starting up a measurement software in a master control computer 32, and turning on a laser 37, wherein the light emitted by the laser 37 forms a point light source 1 after being transmitted via an optical fiber 38, and the light emitted from the point light source 1 forms a measurement beam 5 after passing through a first beam splitter 2, a collimating lens 3 and a converging lens 4;

b) fixing a test lens 17 on a 5D adjusting mount 39, and fixing a reflector 19 behind the test lens 17, adjusting the test lens 17 such that it is co-optical-axial with the measurement beam 5, and adjusting the reflector 19 such that it is perpendicular to the optical axis of the measurement beam 5;

c) controlling the axial translation of the translation stage 27 by the measurement software of the master control computer 32 via an electromechanical control device 28, thereby driving the test lens 17 and the reflector 19 to be concurrently scanned along the optical axis direction, and when the focus of the measurement beam 6 sweeps over the front surface of the test lens 20, detecting a differential confocal response curve as shown in Fig.16 by the differential confocal measuring system 16 with the measurement software, and determining by detecting the absolute zero point of the differential confocal response signal that the focus of the measurement beam 6 coincides with the front surface of the test lens 20, recording the current location $Z_1$ of the translation stage 27;

d) moving the test lens 17 and the reflector 19 along the optical axis direction, and when the focus of the measurement beam 6 sweeps over the back surface of the test lens 21, obtaining again a differential confocal response curve as shown in Fig.16, determining with the measurement software by detecting again the absolute zero point of the differential confocal response signal that the focus of the measurement beam 6 coincides with the back surface of the test lens 21, and recording the current location $Z_2$ of the translation platform 27;

e) moving the test lens 17 and the reflector 19 along the optical axis direction, and when the focus of the measurement beam 6 sweeps over the surface of the reflector 19, obtaining again a differential confocal response curve as shown in Fig.16, determining with the measurement software by detecting again the absolute zero point of the differential confocal response signal that the focus of the measurement beam 6 coincides with the surface of the reflector 19, and recording the current location $Z_3$ of the translation platform 27;

f) removing the test lens 17, and moving the reflector 19 along the optical axis direction, determining with the measurement software by detecting again the absolute zero point of the differential confocal response signal that the focus of the measurement beam 6 coincides with the surface of the reflector 19, and recording the current location $Z_4$ of the translation platform 27;

g) obtaining precisely the refractive index n and the thickness d of the test lens 17 by using ray tracing method from the locations $Z_1$, $Z_2$, $Z_3$ and $Z_4$ obtained in steps c, d, e and f in combination with the curvature radius $r_1$ of the front surface of the test lens 20, the curvature radius $r_2$ of the back surface of the test lens 21 and the focal length $f_1$ and the pupil radius R of the converging lens 4.

The specific step of precisely obtaining the refractive index n and the thickness d of the test lens 17 by using ray tracing method is as follows.

The already-known parameters of K9 plano-convex lens are: nominal refractive index $n_1$=1.51466, nominal thickness d=4.000mm, curvature radius $r_1$=∞ and $r_2$=90.7908mm. The maximum light-transmission aperture of the converging lens 4 used is D=96mm, and focal length $f_1$'=350mm. The axial displacement of the translation stage 27 is measured using an X80 laser interferometer.

The measuring results are as follows: location $Z_1$=-9.34530mm, location $Z_2$=-6.71712mm, location $Z_3$=-0.02176mm and location $Z_4$=1.09363mm. The refractive index of the lens calculated is $n_1$=1.51499, which has a difference from the nominal refractive index of the lens of δn=1.51499-1.51466=0.00033, with a relative error of Δδn= (0.00033/1.51466)x100% ≈ 0.02%. The thickness of the lens calculated is d=3.996mm, which has a difference from the nominal refractive index of the lens of δd=4.000-3.996=0.004, with a relative error Δδn=(0.004/4.000)x100%=0.1%.

When the device is used for measuring the refractive index and thickness of a lens, the difference from Embodiment 1 is to position with high precision by using the measurement beam 5 on four locations, i.e., the front surface vertex and the back surface vertex of the test lens, the location of the surface of the reflector 19 in the presence of a lens and the location of the surface of the reflector 19 in the absence of a lens.

**Embodiment 4**

When the axial space of an assembled lenses with two lenses is measured by a device of differential confocal and interference measurement for multiple parameters of an element, as shown in Fig.12, the measuring steps of the device of differential confocal and interference measurement for multiple parameters of an element are as follows:

a) starting up a measurement software in a master control computer 32, and turning on a laser 37, wherein the light emitted by the laser 37 forms a point light source 1 after being transmitted via an optical fiber 38, and the light emitted from the point light source 1 forms a measurement beam 5 after passing through a first beam splitter 2, a collimating lens 3 and a converging lens 4;

b) inputting the parameters of the test assembled lenses 22 into the measurement software, wherein the curvature radiuses are, from left to right, in turn: $r_1$=195.426mm, $r_2$=-140.270 mm, $r_3$=-140.258 mm and $r_4$=-400.906 mm, and the refractive indexes are, from left to right, in turn: $n_0$=1, $n_1$=1.5143, $n_2$=1 and $n_3$=1.668615;

c) fixing the test assembled lenses 22 on a 5D adjusting mount 39, and irradiating the measurement beam 5 on the test assembled lenses 22, passing the light reflected by the optical surface of the test assembled lenses 22 through the converging lens 4 and the collimating lens 3, then reflecting it by the first beam splitter 2 to a second beam splitter 10, wherein the second beam splitter 10 divides the light into two paths, one path enters a figure interference measuring system 9, and the other path enters a differential confocal measuring system 16;

d) making the test assembled lenses 22 co-optical-axial with the measurement beam 5 by adjusting the 5D adjusting mount 39, thereby avoiding the measurement error caused by the offset of the optical axis of the test assembled lenses 22;

e) controlling the axial translation of the translation stage 27 by a electromechanical control device 28 with the measurement software of the master control computer 32, thereby driving the test assembled lenses 22 to be scanned along the optical axis direction, determining, with the differential confocal measuring system 16, by detecting the absolute zero point of a differential confocal response signal of the CCD detector 41 and the CCD detector 42, that the focus of the measurement beam 6 coincides with each surface vertex of the lenses in the test assembled lenses 22, and recording in turn the location coordinates $Z_1$~$Z_4$ of the translation stage 27 at each coincident point, obtaining that $Z_1$=0.16215 mm, $Z_2$=-7.8946 mm, $Z_3$=-8.2271 mm and $Z_4$=-14.5258 mm; and

f) calculating, with the measurement software in the master control computer 32, the axial spaces between each optical surface in turn by the following ray tracing recurrence formula and in combination with the parameters of the test assembled lenses 22:

$$\begin{cases} \alpha_n' = \alpha_{n-1}' + \arcsin\left(\frac{l_{n-1}' - d_{n-1} - r_n}{r_n} \cdot \sin\alpha_{n-1}'\right) - \arcsin\left(\frac{n_{n-1}}{n_n} \cdot \frac{l_{n-1}' - d_{n-1} - r_n}{r_n} \cdot \sin\alpha_{n-1}'\right) \\ \\ l_n' = r_n + \frac{n_{n-1}}{n_n} \cdot \frac{\sin\alpha_{n-1}'}{\sin\alpha_n'} \cdot (l_{n-1}' - d_{n-1} - r_n) \end{cases}$$

wherein, the already-known parameters include the numerical aperture angle $\alpha_0$ of the measurement beam 5, the curvature radiuses $r_1$~$r_4$ and the refractive indexes $n_0$~$n_3$ of each surface of two single lenses in the test assembled lenses 22, and the measured four location coordinates $Z_1$~$Z_4$; the initial condition is that $\alpha_0'=\alpha_0$, $l_0'=|z_{n+1}-z_1|$ and $d_0=0$. The iterative result will be the axial space $d_n=l_n'$ between the $n^{th}$ optical surface and the n+1 $^{th}$ optical surface. When substituted into the formula, the axial space between two lenses can be obtained as d=0.3178mm.

When the device is used for measuring the axial spaces of an assembled lenses, the difference from Embodiment 1 is to position the vertex of each optical surface of the test assembled lenses 22 with high precision by using the measurement beam 5, thereby realizing the high-precision measurement of the axial spaces of the test assembled lenses 22 by using ray tracing method.

**Embodiment 5**

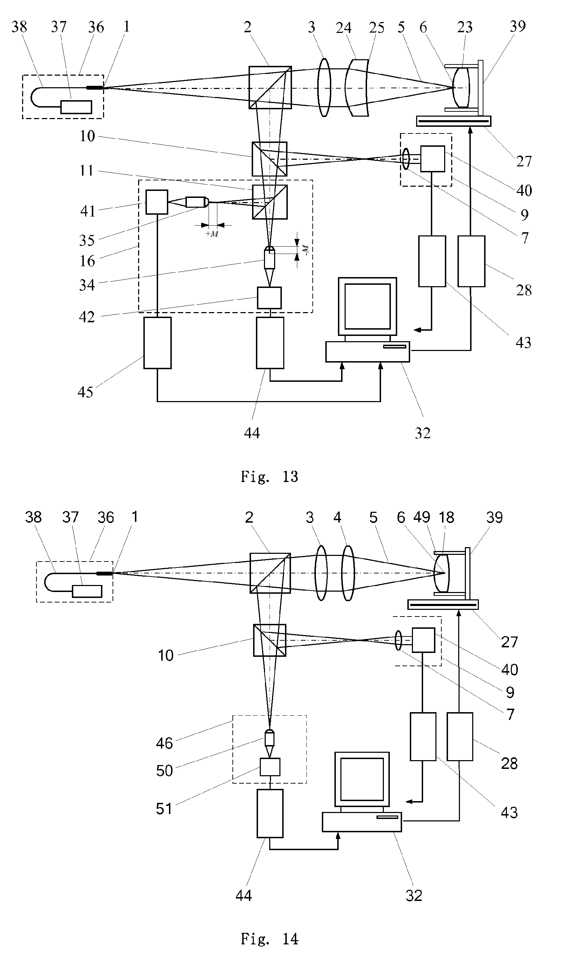

When the surface profile of an element is measured by a device of differential confocal and interference measurement for multiple parameters of an element, as shown in Fig.13, the measuring steps of the device of differential confocal and interference measurement for multiple parameters of an element are as follows:

a) starting up a measurement software in a master control computer 32, and turning on a laser 37, wherein the light emitted by the laser 37 forms a point light source 1 after being transmitted via an optical fiber 38, the light emitted from the point light source 1 passes through a first beam splitter 2 and a collimating lens 3 to form a parallel light beam;

b) removing the converging lens 4, and selecting different transmission spheres 24 for different test elements 23, installing the selected transmission sphere 24 on the optical path of the parallel light emitted from the collimating lens 3, adjusting the transmission sphere 24 such that it is co-optical-axial with the collimating lens 3, wherein, when a parallel light is irradiated on the transmission sphere 24, a part of the light will be reflected back along the incident optical path by the reference surface of the transmission sphere 25;

c) fixing an test element 23 on a 5D adjusting mount 39, and adjusting the test element 23 by the 5D adjusting mount 39 such that it is co-optical-axial with a measurement beam 5, wherein, when a light is irradiated on the surface of the test element 23, a part of the light is reflected by the surface of the test element 23, and the light reflected interferes with the light reflected by the reference surface of the transmission sphere 25, the two beams of interference light pass through the collimating lens 3, then are reflected by the first beam splitter 2 to a second beam splitter 10, wherein the second beam splitter 10 divides the light into two paths, one path enters a figure interference measuring system 9, and the other path enters a differential confocal measuring system 16;

d) moving the test element 23 by the translation stage 27 to a location where the focus of the measurement beam 6 coincides with the spherical center of the surface of the test element 23 if the surface of the test element 23 is a concave spherical surface or a convex spherical surface, and adjusting the 5D adjusting mount 39 till a clear interference fringe is observed with a CCD 40, or adjusting directly the 5D adjusting mount 39 till a clear interference fringe is observed with a CCD 40 if the surface of the test element 23 is a plane;

e) moving the transmission sphere 24 along the axial direction in a four-step phaseshift mode, wherein the measurement software of the master control computer 32 captures four frames of interference patterns via the CCD 40 and computs the surface profile of the test element 23 via phase-unwrapping algorithm.

When the device is used for measuring the surface profile of an element, the difference from Embodiment 1 is to remove the converging lens 4 and replace it with a transmission sphere 24, and during measuring, a phase-unwrapping calculation is performed on the interference patterns measured via a four-step phaseshift method by using the figure interference measuring system 9 of the device, thus obtaining the surface profile of the test element 23.

The figure interference measuring system 9 in the system comprises an interference collimating lens 7 and a CCD 40. The interference collimating lens 7 collimates the interference light beam, and then irradiates it on a CCD 40 to form an interference image. The CCD 40 inputs the interference image detected to the measurement software of the master control computer 32 via an image capture card 43, and the measurement software computes the surface profile of the test element 23.

When the curvature radius of a convex spherical surface is measured by a device of confocal and interference measurement for multiple parameters of an element, as shown in Fig.14, except for that the differential confocal measuring system 16 in Embodiment 1 is replaced by a confocal measuring system 46, the device of confocal and interference measurement for multiple parameters of an element is the same as the device in Embodiment 1. The measuring steps of measuring the curvature radius of a convex spherical surface by using a device of confocal and interference measurement for multiple parameters of an element are the same as the steps in Embodiment 1 except for that, said device determines that the focus of the measurement beam 6 coincides with the vertex and the spherical center of the surface of the test element with spherical surface 49 by detecting the maximum of the confocal response curve as shown in Fig. 15 with the confocal measuring system 46.

When the back focal length of a convex lens is measured by a device of confocal and interference measurement for multiple parameters of an element, said device is the same as the device of differential confocal and interference measurement for multiple parameters of an element used in Embodiment 2 as shown in Fig.10 except for that the differential confocal measuring system 16 in Embodiment 2 is replaced by a confocal measuring system 46. The steps of measuring the back focal length of a convex lens by using said device are the same as those in Embodiment 2 except for that, said device determines that the focus of the measurement beam 6 coincides with the surface of the reflector 19 by detecting the maximum of the confocal response curve as shown in Fig.15 with the confocal measuring system 46.

When the refractive index and the thickness of a plano-convex lens are measured by a device of confocal and interference measurement for multiple parameters of an element, said device is the same as the device of differential confocal and interference measurement for multiple parameters of an element used in Embodiment 3 as shown in Fig. 11 except for that the differential confocal measuring system 16 in Embodiment 3 thereof is replaced by a confocal measuring system 46. The steps of measuring the refractive index and the thickness of a plano-convex lens by using said device are the same as those in Embodiment 3 except for that, said device determines that the focus of the measurement beam 6 coincides with the front surface vertex and the back surface vertex of the test lens, the surface of the reflector 19 in the presence of the test lens 17 and the surface of the reflector 19 in the absence of the test lens 17 by detecting the maximum of the confocal response curve as shown in Fig.15 with the confocal measuring system 46.

When the axial space of an assembled lenses with two lenses is measured by a device of confocal and interference measurement for multiple parameters of an element, said device is the same as the device of differential confocal and interference measurement for multiple parameters of an element used in Embodiment 4 as shown in Fig. 12 except for that the differential confocal measuring system 16 in Embodiment 4 is replaced by a confocal measuring system 46. The steps of measuring the axial space of an assembled lenses with two lenses by using said device are the same as those in Embodiment 4 except for that, said device determines that the focus of the measurement beam 6 coincides with the vertex of each optical surface of the test assembled lenses 22 by detecting the maximum of the confocal response curve as shown in Fig.15 with the confocal measuring system 46.

When the surface profile of an element is measured by a device of confocal and interference measurement for multiple parameters of an element, said device is the same as the device of differential confocal and interference measurement for multiple parameters of an element used in Embodiment 5 as shown in Fig. 13 except for that the differential confocal measuring system 16 in Embodiment 5 is replaced by a confocal measuring system 46. The steps of measuring the surface profile of the element by using said device are completely the same as those in Embodiment 5.

In these embodiments, the concurrent high-precision measurement of multiple parameters of an element and the measurement of the surface profile of an element are realized by a series of measures. Moreover, during the whole measuring process, the test element is not contacted, and it is not needed to readjust the optical path or disassemble the test element, thus the measurement has high precision and high speed.

Some specific embodiments of the invention have been illustrated above in combination with the drawings, but such illustration should not be construed as limiting the scope of the invention, and the protection scope of the invention is defined by the appended claims. Therefore, any modification on the basis of the appended claims will pertain to the scope of the invention.

**Claims**

1.    A method of differential confocal and interference measurement for multiple parameters of an element, comprising the steps of:

turning on a point light source, passing a light emitted from the point light source through a first beam splitter, a collimating lens and a converging lens to form a measurement beam that irradiates on a test element;
adjusting the test element such that it is co-optical-axial with the measurement beam;
passing a light reflected by the test element through the converging lens and the collimating lens, then reflecting the light by the first beam splitter to a second beam splitter which divides the light into two paths, wherein one path enters a figure interference measuring system, and the other path enters a differential confocal measuring system;
forming an interference pattern by the figure interference measuring system, and forming a differential confocal response signal by the differential confocal measuring system, wherein a surface profile of the test element is measured from the interference pattern, and a surface curvature radius of an element with spherical surface, a back focal length of a lens, a refractive index of a lens, a thickness of a lens and an axial spaces of an assembled lenses are measured by the differential confocal response signal.

2.    The method of differential confocal and interference measurement for multiple parameters of an element according to claim 1, **characterized in that**:

when the surface profile of the test element is measured, the figure interference measuring system measures, in cooperation with the phaseshift of a reference light beam, multiple frames of interference images formed by the light reflected from the test element and a reference light beam, and obtains the surface profile of the test element by processing the interference images with phaseshift algorithm;
when the surface curvature radius of an element with spherical surface is measured, the vertex and the spherical center of the surface of the test element with spherical surface is positioned via the absolute zero point of the differential confocal response signal generated by the differential confocal measuring system, and the distance between these two points is measured as the surface curvature radius of the test element with spherical surface; when the back focal length of a lens is measured, the focus of the test lens is positioned via the absolute zero point of the differential confocal response signal generated by the differential confocal measuring system, and the distance between the focus and the back surface vertex of the test lens is measured as the back focal length of the test lens;

when the refractive index and the thickness of a lens is measured, a reflector is added as an auxiliary mirror, and the front surface vertex of the test lens, the back surface vertex of the test lens, the surface of the reflector in the presence of the test lens and the surface of the reflector in the absence of the test lens are positioned via the absolute zero point of the differential confocal response signal generated by the differential confocal measuring system, and then the refractive index and the thickness of the test lens are obtained by using ray tracing method in combination with the front surface curvature radius of the test lens, the back surface curvature radius of the test lens, the focal length and the pupil radius of the converging lens;

when the axial spaces of an assembled lenses are measured, each surface vertex of the lenses in the test assembled lenses is positioned via the absolute zero point of the differential confocal response signal generated by the differential confocal measuring system, and then the axial spaces between each surface in the test assembled lenses are obtained by using ray tracing method in combination with the numerical aperture angle of the measurement beam, the curvature radius of each surface and the refractive index of each lens in the test assembled lenses.

3. The method of differential confocal and interference measurement for multiple parameters of an element according to claim 1, **characterized in that**, when the surface curvature radius of an element with spherical surface is measured using the differential confocal response signal generated by the differential confocal measuring system, the specific steps thereof are as follows:

a) placing the test element with spherical surface behind the converging lens, and adjusting the test element with spherical surface such that it is co-optical-axial with the measurement beam and the light irradiated on the surface of the test element with spherical surface is partly reflected;

b) moving the test element with spherical surface such that it is scanned along the optical axis direction, and determining that the focus of the measurement beam coincides with the surface vertex of the test element with spherical surface by detecting the absolute zero point of the differential confocal response signal generated by the differential confocal measuring system, and recording the current location $Z_1$ of the test element with spherical surface;

c) moving the test element with spherical surface along the optical axis direction, and determining, by detecting again the absolute zero point of the differential confocal response signal, that the focus of the measurement beam coincides with the spherical center of the surface of the test element with spherical surface, and recording the current location $Z_2$ of the test element with spherical surface; and

d) calculating the surface curvature radius $r=|Z_1-Z_2|$ of the test element with spherical surface.

4. The method of differential confocal and interference measurement for multiple parameters of an element according to claim 1, **characterized in that**, when the back focal length of a lens is measured by using the differential confocal response signal generated by the differential confocal measuring system, the specific steps thereof are as follows:

a) removing the converging lens, placing the test lens on the optical path of a parallel light emitted from the collimating lens, and adjusting the test lens such that it is co-optical-axial with the collimating lens and the parallel light forms a measurement beam after passing through the test lens;

b) placing a reflector behind the test lens, and adjusting the reflector such that it is perpendicular to the optical axis of the measurement beam and the light irradiated on the surface of the reflector is reflected;

c) moving the reflector such that it is scanned along the optical axis direction, and determining that the focus of the test lens coincides with the surface of the reflector by detecting the absolute zero point of the differential confocal response signal generated by the differential confocal measuring system, and recording the current location $Z_1$ of the reflector;

d) moving the reflector along the optical axis direction to the back surface vertex of the test lens, and recording the current location $Z_2$ of the reflector; and

e) calculating the back focal length $l_F'=|Z_1-Z_2|$ of the test lens.

5. The method of differential confocal and interference measurement for multiple parameters of an element according to claim 1, **characterized in that**, when the refractive index and the thickness of a lens are measured using the differential confocal response signal generated by the differential confocal measuring system, the specific steps thereof are as follows:

a) placing the test lens behind the converging lens, adjusting the test lens such that it is co-optical-axial with the measurement beam, and placing a reflector behind the test lens, adjusting the reflector such that it is perpendicular to the optical axis of the measurement beam;

b) moving the test lens and the reflector as a whole such that they are scanned along the optical axis direction, and determining that the focus of the measurement beam coincides with the front surface vertex of the test lens by detecting the absolute zero point of the differential confocal response signal generated by the differential confocal measuring system, and recording the current location $Z_1$ of the test lens and the reflector as a whole;

c) keeping to move the test lens and the reflector as a whole along the optical axis direction such that the measurement beam is focused on the back surface of the test lens, and determining, by detecting the absolute zero point of the differential confocal response signal, that the focus of the measurement beam coincides with the back surface vertex of the test lens, and recording the current location $Z_2$ of the test lens and the reflector as a whole;

d) keeping to move the test lens and the reflector as a whole along the optical axis direction such that the measurement beam passing through the test lens is focused on the surface of the reflector, and determining, by detecting the absolute zero point of the differential confocal response signal, that the focus of the measurement beam coincides with the surface of the reflector, and recording the current location $Z_3$ of the test lens and the reflector as a whole;

e) removing the test lens, moving the reflector along the optical axis direction, and determining, by detecting the absolute zero point of the differential confocal response signal, that the focus of the measurement beam coincides with the surface of the reflector, and recording the current location $Z_4$ of the reflector; and

f) precisely obtaining the refractive index n and the thickness d of the test lens by using ray tracing method in combination with the front surface curvature radius $r_1$ of the test lens, the back surface curvature radius $r_2$ of the test lens, the focal length $f_1$ and the pupil radius R of the converging lens.

6. The method of differential confocal and interference measurement for multiple parameters of an element according to claim 1, **characterized in that**, when the axial spaces of an assembled lenses are measured using the differential confocal response signal generated by the differential confocal measuring system, the specific steps thereof are as follows:

a) placing the test assembled lenses behind the converging lens, and adjusting the test assembled lenses such that it is co-optical-axial with the measurement beam;

b) moving the test assembled lenses such that it is scanned along the optical axis direction, determining that the focus of the measurement beam coincides with each surface vertex of the lenses in the test assembled lenses by detecting the absolute zero point of the differential confocal response signal generated by the differential confocal measuring system, and recording in turn the location coordinates $Z_1$, $Z_2$,..., $Z_m$ of the test assembled lenses at each coincident point, wherein m is the total number of surfaces of the lenses in the test assembled lenses; and

c) precisely obtaining the axial space $d_n$ between the $n^{th}$ surface and the $n+1^{th}$ surface in the test assembled lenses by using ray tracing method in combination with the numerical aperture angle $\alpha_0$ of the measurement beam, the curvature radius $r_1 \sim r_m$ of each surface in the test assembled lenses, the refractive index $n_0 \sim n_{m-1}$ of each material between the adjacent surfaces in the test assembled lenses and the location coordinate $Z_1 \sim Z_m$ of the test assembled lenses.

7. The method of differential confocal and interference measurement for multiple parameters of an element according to claim 1, **characterized in that**, when the surface profile of the test element is measured by the figure interference measuring system, the specific steps thereof are as follows:

a) removing the converging lens and replacing it with a transmission sphere, adjusting the transmission sphere such that it is co-optical-axial with the collimating lens, and when a parallel light is irradiated on the transmission sphere, the light is partly reflected back by the reference surface of the transmission sphere along the incident optical path;

b) placing the test element behind the transmission sphere, and adjusting the test element such that it is co-optical-axial with the measurement beam;

c) the light irradiated on the surface of the test element being partly reflected, wherein the light reflected back by the surface of the test element and the light reflected back by the reference surface of the transmission sphere interfere with each other and enter the figure interference measuring system, forming an interference pattern on an image sensor;

d) moving the test element along the optical axis direction till the focus of the measurement beam coincides with the spherical center of the surface of the test element if the surface of the test element is a concave sphere surface or a convex sphere surface, and adjusting the test element till a clear interference pattern is formed on the image sensor; or directly adjusting the test element till a clear interference pattern is formed on the image sensor if the surface of the test element is a plane; and

e) measuring the surface profile of the test element via phaseshift algorithm.

8. The method of differential confocal and interference measurement for multiple parameters of an element according to claim 1 or 2 or 3 or 4 or 5 or 6, **characterized in that**: an annular pupil is added in the optical path for changing the measuremet beam and forming an annular measurement beam, thereby lowering the wavefront aberrations of the measurement beam and reducing measurement error when measuring the element parameters.

9. A device of differential confocal and interference measurement for multiple parameters of an element, which comprises a point light source, **characterized in that**, the device comprises a first beam splitter, a collimating lens, a converging lens, a second beam splitter, a differential confocal measuring system and a figure interference measuring system; wherein, the first beam splitter, the collimating lens and the converging lens are placed in the light emission direction, the second beam splitter is placed in the reflection direction of the first beam splitter and it divides the light into two paths, wherein one path enters the differential confocal measuring system, and the other path enters the figure interference measuring system.

10. The device of differential confocal and interference measurement for multiple parameters of an element according to claim 9, **characterized in that**, when the device is used for measuring the surface curvature radius of an element with spherical surface, the specific steps thereof are as follows:

a) placing the test element with spherical surface behind the converging lens, and adjusting the test element with spherical surface such that it is co-optical-axial with the measurement beam and the light irradiated on the surface of the test element with spherical surface is partly reflected;

b) moving the test element with spherical surface such that it is scanned along the optical axis direction, and determining that the focus of the measurement beam coincides with the surface vertex of the test element with spherical surface by detecting the absolute zero point of the differential confocal response signal generated by the differential confocal measuring system, and recording the current location $Z_1$ of the test element with spherical surface;

c) keeping to move the test element with spherical surface along the optical axis direction, and determining, by detecting again the absolute zero point of the differential confocal response signal, that the focus of the measurement beam coincides with the spherical center of the surface of the test element with spherical surface, and recording the current location $Z_2$ of the test element with spherical surface; and

d) calculating the surface curvature radius $r=|Z_1-Z_2|$ of the test element with spherical surface.

11. The device of differential confocal and interference measurement for multiple parameters of an element according to claim 9, **characterized in that**, when the device is used for measuring the back focal length of a lens, the specific steps thereof are as follows:

a) removing the converging lens, placing the test lens on the optical path of a parallel light emitted from the collimating lens, and adjusting the test lens such that it is co-optical-axial with the collimating lens and the parallel light forms a measurement beam after passing through the test lens;

b) placing a reflector behind the test lens, and adjusting the reflector such that it is perpendicular to the optical axis of the measurement beam and the light irradiated on the surface of the reflector is reflected;

c) moving the reflector such that it is scanned along the optical axis direction, and determining that the focus of the test lens coincides with the surface of the reflector by detecting the absolute zero point of the differential confocal response signal generated by the differential confocal measuring system, and recording the current location $Z_1$ of the reflector;

d) moving the reflector along the optical axis direction to the back surface vertex of the test lens, and recording the current location $Z_2$ of the reflector; and

e) calculating the back focal length $l_F'=|Z_1-Z_2|$ of the test lens.

12. The device of differential confocal and interference measurement for multiple parameters of an element according to claim 9, **characterized in that**, when the device is used for measuring the refractive index and the thickness of a lens, the specific steps thereof are as follows:

a) placing the test lens behind the converging lens, adjusting the test lens such that it is co-optical-axial with the measurement beam, and placing a reflector behind the test lens, adjusting the reflector such that it is perpendicular to the optical axis of the measurement beam;

b) moving the test lens and the reflector as a whole such that they are scanned along the optical axis direction, and determining that the focus of the measurement beam coincides with the front surface vertex of the test lens by detecting the absolute zero point of the differential confocal response signal generated by the differential confocal measuring system, and recording the current location $Z_1$ of the test lens and the reflector as a whole;

c) keeping to move the test lens and the reflector as a whole along the optical axis direction such that the measurement beam is focused on the back surface of the test lens, and determining, by detecting the absolute zero point of the differential confocal response signal, that the focus of the measurement beam coincides with the back surface vertex of the test lens, and recording the current location $Z_2$ of the test lens and the reflector as a whole;

d) keeping to move the test lens and the reflector as a whole along the optical axis direction such that the measurement beam passing through the test lens is focused on the surface of the reflector, and determining, by detecting the absolute zero point of the differential confocal response signal, that the focus of the measurement beam coincides with the surface of the reflector, and recording the current location $Z_3$ of the test lens and the reflector as a whole;

e) removing the test lens, moving the reflector along the optical axis direction, and determining, by detecting the absolute zero point of the differential confocal response signal, that the focus of the measurement beam coincides with the surface of the reflector, and recording the current location $Z_4$ of the reflector; and

f) precisely obtaining the refractive index n and the thickness d of the test lens by using ray tracing method in combination with the front surface curvature radius $r_1$ of the test lens, the back surface curvature radius $r_2$ of the test lens, the focal length $f_1$ and the pupil radius R of the converging lens.

13. The device of differential confocal and interference measurement for multiple parameters of an element according to claim 9, **characterized in that**, when the device is used for measuring the axial spaces of an assembled lenses, the specific steps thereof are as follows:

a) placing the test assembled lenses behind the converging lens, and adjusting the test assembled lenses such that it is co-optical-axial with the measurement beam;

b) moving the test assembled lenses such that it is scanned along the optical axis direction, determining respectively that the focus of the measurement beam coincides with each surface vertex of the lenses in the test assembled lenses by detecting the absolute zero point of the differential confocal response signal generated by the differential confocal measuring system, and recording in turn the location coordinates $Z_1$, $Z_2$,..., $Z_m$ of the test assembled lenses at each coincident point, wherein m is the total number of surfaces of the lenses in the test assembled lenses; and

c) precisely obtaining the axial space $d_n$ between the $n^{th}$ surface and the $n+1^{th}$ surface in the test assembled lenses by using ray tracing method in combination with the numerical aperture angle $\alpha_0$ of the measurement beam, the curvature radius $r_1 \sim r_m$ of each surface in the test assembled lenses, the refractive index $n_0 \sim n_{m-1}$ of each material between the adjacent surfaces in the test assembled lenses and the location coordinate $Z_1 \sim Z_m$ of the test assembled lenses.

14. The device of differential confocal and interference measurement for multiple parameters of an element according to claim 9, **characterized in that**, when the device is used for measuring the surface profile of the test element, the specific steps thereof are as follows:

a) removing the converging lens and replacing it with a transmission sphere, adjusting the transmission sphere such that it is co-optical-axial with the collimating lens, and when a parallel light is irradiated on the transmission sphere, the light is partly reflected back by the reference surface of the transmission sphere along the incident optical path;

b) placing the test element behind the transmission sphere, and adjusting the test element such that it is co-optical-axial with the measurement beam;

c) the light irradiated on the surface of the test element being partly reflected, wherein the light reflected back by the surface of the test element and the light reflected back by the reference surface of the transmission sphere interfere with each other and enter the figure interference measuring system, forming an interference pattern on an image sensor;

d) moving the test element along the optical axis direction till the focus of the measurement beam coincides with the spherical center of the surface of the test element if the surface of the test element is a concave sphere surface or a convex sphere surface, and adjusting the test element till a clear interference pattern is formed on the image sensor; or directly adjusting the test element till a clear interference pattern is formed on the image sensor if the surface of the test element is a plane; and

e) obtaining the surface profile of the test element via phaseshift algorithm.

15. A device of confocal and interference measurement for multiple parameters of an element, which comprises a point light source, **characterized in that**: the device comprises a first beam splitter, a collimating lens, a converging lens, a second beam splitter, a confocal measuring system and a figure interference measuring system; wherein, the first beam splitter, the collimating lens and the converging lens are placed in the light emission direction, the second beam splitter is placed in the reflection direction of the first beam splitter and it divides the light into two paths, wherein one path enters the confocal measuring system, and the other path enters the figure interference measuring system; a confocal response signal is formed by the confocal measuring system, and an interference pattern is formed by the figure interference measuring system; the surface curvature radius of an element with spherical surface, the back focal length of a lens, the refractive index of a lens, the thickness of a lens and the axial spaces of an assembled lenses are measured by the confocal response signal, and the surface profile of the test element is measured by the interference pattern.

16. The device of confocal and interference measurement for multiple parameters of an element according to claim 15, **characterized in that**, when the device is used for measuring the surface curvature radius of an element with spherical surface, the specific steps thereof are as follows:

a) placing the test element with spherical surface behind the converging lens, and adjusting the test element with spherical surface such that it is co-optical-axial with the measurement beam and the light irradiated on the surface of the test element with spherical surface is partly reflected;

b) moving the test element with spherical surface such that it is scanned along the optical axis direction, and determining that the focus of the measurement beam coincides with the surface vertex of the test element with spherical surface by detecting the maximum of the confocal response signal generated by the confocal measuring system, and recording the current location $Z_1$ of the test element with spherical surface;

c) keeping to move the test element with spherical surface along the optical axis direction, and determining, by detecting again the maximum of the confocal response signal, that the focus of the measurement beam coincides with the spherical center of the surface of the test element with spherical surface, and recording the current location $Z_2$ of the test element with spherical surface; and

d) calculating the surface curvature radius $r=|Z_1-Z_2|$ of the test element with spherical surface.

17. The device of confocal and interference measurement for multiple parameters of an element according to claim 15, **characterized in that**, when the device is used for measuring the back focal length of a lens, the specific steps thereof are as follows:

a) removing the converging lens, placing the test lens on the optical path of a parallel light path emitted from the collimating lens, and adjusting the test lens such that it is co-optical-axial with the collimating lens and the parallel light forms a measurement beam after passing through the test lens;

b) placing a reflector behind the test lens, and adjusting the reflector such that it is perpendicular to the optical axis of the measurement beam and the light irradiated on the surface of the reflector is reflected;

c) moving the reflector such that it is scanned along the optical axis direction, and determining that the focus of the test lens coincides with the surface of the reflector by detecting the maximum of the confocal response signal generated by the confocal measuring system, and recording the current location $Z_1$ of the reflector;

d) moving the reflector along the optical axis direction to the back surface vertex of the test lens, and recording the current location $Z_2$ of the reflector; and

e) calculating the back focal length $l_F'=|Z_1-Z_2|$ of the test lens.

18. The device of confocal and interference measurement for multiple parameters of an element according to claim 15, **characterized in that**, when the device is used for measuring the refractive index and the thickness of a lens, the specific steps thereof are as follows:

a) placing the test lens behind the converging lens, adjusting the test lens such that it is co-optical-axial with the measurement beam, and placing a reflector behind the test lens, adjusting the reflector such that it is perpendicular to the optical axis of the measurement beam;

b) moving the test lens and the reflector as a whole such that they are scanned along the optical axis direction, and determining that the focus of the measurement beam coincides with the location of the front surface vertex of the test lens by detecting the maximum of the confocal response signal generated by the confocal measuring system, and recording the current location $Z_1$ of the test lens and the reflector as a whole;

c) keeping to move the test lens and the reflector as a whole along the optical axis direction such that the measurement beam is focused on the back surface of the test lens, and determining, by detecting the maximum of the confocal response signal, that the focus of the measurement beam coincides with the back surface vertex of the test lens, and recording the current location $Z_2$ of the test lens and the reflector as a whole;

d) keeping to move the test lens and the reflector as a whole along the optical axis direction such that the measurement beam passing through the test lens is focused on the surface of the reflector, and determining, by detecting the maximum of the confocal response signal, that the focus of the measurement beam coincides with the surface of the reflector, and recording the current location $Z_3$ of the test lens and the reflector as a whole;

e) removing the test lens, moving the reflector along the optical axis direction, and determining, by detecting the maximum of the confocal response signal, that the focus of the measurement beam coincides with the surface of the reflector, and recording the current location $Z_4$ of the reflector; and

f) precisely obtaining the refractive index n and the thickness d of the test lens by using ray tracing method in combination with the front surface curvature radius $r_1$ of the test lens, the back surface curvature radius $r_2$ of the test lens, the focal length $f_1$ and the pupil radius R of the converging lens.

19. The device of confocal and interference measurement for multiple parameters of an element according to claim 15, **characterized in that**, when the device is used for measuring the axial spaces of an assembled lenses, the specific steps thereof are as follows:

a) placing the test assembled lenses behind the converging lens, and adjusting the test assembled lenses such that it is co-optical-axial with the measurement beam;

b) moving the test assembled lenses such that it is scanned along the optical axis direction, and determining that the focus of the measurement beam coincides with each surface vertex of the lenses in the test assembled lenses by detecting the maximum of the confocal response signal generated by the confocal measuring system, and recording in turn the location coordinates $Z_1$, $Z_2$,..., $Z_m$ of the test assembled lenses at each coincident point, wherein m is the total number of surfaces of the lenses in the test assembled lenses; and

c) precisely obtaining the axial space $d_n$ between the $n^{th}$ surface and the $n+1^{th}$ surface in the test assembled lenses by using ray tracing method in combination with the numerical aperture angle $\alpha_0$ of the measurement beam, the curvature radius $r_1 \sim r_m$ of each surface in the test assembled lenses, the refractive index $n_0 \sim n_{m-1}$ of each material between the adjacent surfaces in the test assembled lenses and the location coordinate $Z_1$-$Z_m$ of the test assembled lenses.

20. The device of confocal and interference measurement for multiple parameters of an element according to claim 15, **characterized in that**, when the device is used for measuring the surface profile of the test element, the specific steps thereof are as follows:

a) removing the converging lens and replacing it with a transmission sphere, adjusting the transmission sphere such that it is co-optical-axial with the collimating lens, and when a parallel light is irradiated on the transmission sphere, the light is partly reflected back by the reference surface of the transmission sphere along the incident optical path;

b) placing the test element behind the transmission sphere, and adjusting the test element such that it is co-optical-axial with the measurement beam;

c) the light irradiated on the surface of the test element being partly reflected, wherein the light reflected back by the surface of the test element and the light reflected back by the reference surface of the transmission sphere interfere with each other and enter the figure interference measuring system, forming an interference pattern on an image sensor;

d) moving the test element along the optical axis direction till the focus of the measurement beam coincides with the spherical center of the surface of the test element if the surface of the test element is a concave sphere surface or a convex sphere surface, and adjusting the test element till a clear interference pattern is formed on the image sensor; or directly adjusting the test element till a clear interference pattern is formed on the image sensor if the surface of the test element is a plane; and

e) measuring the surface profile of the test element via phaseshift algorithm.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

# INTERNATIONAL SEARCH REPORT

International application No.

**PCT/CN2011/081986**

## A. CLASSIFICATION OF SUBJECT MATTER

See the extra sheet
According to International Patent Classification (IPC) or to both national classification and IPC

## B. FIELDS SEARCHED

Minimum documentation searched (classification system followed by classification symbols)

IPC: G01B 11, G01N 21, G01M 11

Documentation searched other than minimum documentation to the extent that such documents are included in the fields searched

Electronic data base consulted during the international search (name of data base and, where practicable, search terms used)

CNABS, CNTXT, VEN, CNKI: surface shape, confocal, differential, interference, zero, shape, profile, topography, curvature radius, focus, foci, refractive index, thickness, aplanatic lens, distance, gap, aplanatic lens

## C. DOCUMENTS CONSIDERED TO BE RELEVANT

| Category* | Citation of document, with indication, where appropriate, of the relevant passages | Relevant to claim No. |
|---|---|---|
| Y | CN 101718531 A (BEIJING INSTITUTE OF TECHNOLOGY), 02 June 2010 (02.06.2010), description, paragraphs [0015]-[0076], and figures 1-4 | 1-20 |
| Y | A Small Differential Confocal Optical Detection System Using a Gradient-Index Lens, ACTA OPTICA SINICA, February 2003, vol. 23, no. 2, pages 202-206 | 1-20 |
| Y | CN 101526341 A (BEIJING INSTITUTE OF TECHNOLOGY), 09 September 2009 (09.09.2009), description, page 5, line 6 to page 6, line 21, and figure 6 | 2-3, 10, 15-20 |
| Y | CN 101769821 A (BEIJING INSTITUTE OF TECHNOLOGY), 07 July 2010 (07.07.2010), description, paragraphs [0068]-[0088], and figure 1 | 2, 5, 8, 12, 18 |
| Y | CN 101762240 A (BEIJING INSTITUTE OF TECHNOLOGY), 30 June 2010 (30.06.2010), description, paragraphs [0051]-[0062], and figure 2 | 2, 6, 13, 19 |
| PX | CN 102147240 A (BEIJING INSTITUTE OF TECHNOLOGY), 10 August 2011 (10.08.2011), description, paragraphs [0015]-[0136], claims 1-10, and figures 8-15 | 1-20 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 February 2011 (03.02.2011) | **23 February 2012 (23.02.2012)** |

| Name and mailing address of the ISA: State Intellectual Property Office of the P. R. China No. 6, Xitucheng Road, Jimenqiao Haidian District, Beijing 100088, China Facsimile No.: (86-10) 62019451 | Authorized officer **SU, Aihua** Telephone No.: (86-10) **62085747** |
|---|---|

Form PCT/ISA/210 (second sheet) (July 2009)

## INTERNATIONAL SEARCH REPORT

| | International application No. |
| --- | --- |
| | **PCT/CN2011/081986** |

| C (Continuation). | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 101520304 A (HARBIN INSTITUTE OF TECHNOLOGY), 02 September 2009 (02.09.2009), the whole document | 1-20 |
| A | EP 0814318 A2 (INST PHYSICAL & CHEM RES), 29 December 1997 (29.12.1997), the whole document | 1-20 |
| A | JP 2010025689 A (OLYMPUS OPTICAL CO., LTD.), 04 February 2010 (04.02.2010), the whole document | 1-20 |
| A | US 6657216 B1 (NANOMETRICS INC.), 02 December 2003 (02.12.2003), the whole document | 1-20 |

Form PCT/ISA/210 (continuation of second sheet) (July 2009)

## INTERNATIONAL SEARCH REPORT
### Information on patent family members

| International application No. |
| --- |
| **PCT/CN2011/081986** |

| Patent Documents referred in the Report | Publication Date | Patent Family | Publication Date |
| --- | --- | --- | --- |
| CN 101718531 A | 02.06.2010 | CN 101718531 B | 05.01.2011 |
| CN 101526341 A | 09.09.2009 | None | |
| CN 101769821 A | 07.07.2010 | None | |
| CN 101762240 A | 30.06.2010 | CN 101762240 B | 27.07.2011 |
| CN 102147240 A | 10.08.2011 | None | |
| CN 101520304 A | 02.09.2009 | None | |
| EP 0814318 A2 | 29.12.1997 | JP 10002855 A | 06.01.1998 |
| | | US 5943134 A | 24.08.1999 |
| | | EP 0814318 B1 | 28.08.2002 |
| | | DE 69714915 T | 02.10.2002 |
| | | JP 3459327 B2 | 20.10.2003 |
| | | EP 0814318 A3 | 10.11.1999 |
| JP 2010025689 A | 04.02.2010 | None | |
| US 6657216 B1 | 02.12.2003 | None | |

Form PCT/ISA/210 (patent family annex) (July 2009)

# INTERNATIONAL SEARCH REPORT

International application No.

**PCT/CN2011/081986**

**CLASSIFICATION OF SUBJECT MATTER**

G01B 11/255 (2006.01)

G01B 11/06 (2006.01) i

G01B 11/14 (2006.01) i

G01N 21/45 (2006.01) i

G01M 11/02 (2006.01) i

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 01133730
- CN 200410006359
- CN 201010173084
- CN 201010000553

**Non-patent literature cited in the description**

- Measuring a small spherical curvature radius via an interference microscope. *Infrared And Laser Engineering,* 2006
- Radius case study: Optical bench measurement and uncertainty including stage error motion. *SPIE,* 2005
- Measurement of the focal length of a long focal length system by Talbot interferometry method. *Chinese Measurement And Test*
- Researches on the accuracy limit of the measurement of long focal length via Ronchi grating and Talbot effect. *Acta Photonica Sinica*
- Method For High-Precision Non-Contact Measurement Of Lens Refractive Index. *Geomatics and Information Science of Wuhan University*
- Measurement Of The Refractive Index Of A Lens By Using An Annular Lateral Shearing Interferometer. *Journal of Harbin University of Science and Technology*
- Refractive and geometric lens characterization through multi-wavelength digital speckle pattern interferometry. *Optics Communications,* 2008, vol. 281, 1022-1029
- Researches On On-Line Measurement Of Assembly Space Based On Image Measurement Technology. *Sensor Technology,* 2005
- Laser Differential Confocal Radius Measurement. *Optics Express,* 2010, vol. 18 (3), 2345-2360